# EUROPÄISCHE PATENTSCHRIFT

(11) **EP 1 313 930 B1**
(45) Veröffentlichungstag und Bekanntmachung des Hinweises auf die Patenterteilung: **16.05.2018**
(21) Anmeldenummer: 01980256.0
(22) Anmeldetag: 22.08.2001
(51) Int. Cl.: E21B 37/06

(54) **VERFAHREN ZUR KONDITIONIERUNG STEHENDER UND FLIESSENDER WASSERSYSTEME**
METHOD FOR CONDITIONING STANDING AND RUNNING WATER SYSTEMS
PROCEDE DE CONDITIONNEMENT DE SYSTEMES D'EAUX STAGNANTES ET D'EAUX COURANTES

(30) Priorität: 25.08.2000 DE 10041904; 13.10.2000 DE 10050904; 16.01.2001 DE 10101671
(43) Veröffentlichungstag der Anmeldung: 28.05.2003
(73) Patentinhaber: LANXESS Deutschland GmbH, 50569 Köln (DE)
(72) Erfinder: SICIUS, Hermann, 40210 Düsseldorf (DE); SILDATKE, Thomas, 51375 Leverkusen (DE); MENZEL, Thomas, 40723 Hilden (DE); WAMBACH, Wolfgang, 51065 Köln (DE); JOENTGEN, Winfried, 50735 Köln (DE); KLAUSA, Thomas, 68794 Oberhausen-Rheinhausen (DE); KLEIN, Thomas, 50678 Köln (DE)
(86) Internationale Anmeldenummer: PCT/EP2001/009678
(87) Internationale Veröffentlichungsnummer: WO 2002/016731

(56) Entgegenhaltungen:
- EP-A- 0 705 794
- WO-A-94/19288
- US-A- 5 116 513
- US-A- 5 523 023
- US-A- 5 658 464

## Beschreibung

Die vorliegende Erfindung betrifft ein Verfahren zur Konditionierung stehender und fließender Wassersysteme mittels Polysuccinimid (PSI) in Kombination mit weiteren Hilfsstoffen sowie neue Konditionierungsmittel auf Basis von Polysuccinimid (PSI) in Kombination mit weiteren Hilfsstoffen zur Verhinderung von Ablagerungen, die in Systemen stehender oder fließender Gewässer durch härtebildende Ionen entstehen.

Unter fließenden Wassersystemen werden im Sinne der vorliegenden Erfindung Bauwerksentwässerungssysteme oder Drainagen angesehen, aber auch Einpresswässer bei der Exploration von Rohstoffen, insbesondere von Erdölen oder Erdgasen, besonders bevorzugt in den sogenannten Squeeze-Operationen der Erdölförderung (bekannt aus US-A 5 655 601).

Bauwerke im Sinne der vorliegenden Erfindung sind beispielsweise Gebäude, Tunnelbauten, Stollen, Kavernen, Staumauern, Talsperren, Wasserkraftbauten, Erddämme, Stützmauern, Straßenbauten, Hangentwässerungsanlagen, Wasserablaufkanäle, Quellfassungen oder provisorische Baugruben. Ebenfalls Bauwerke im Sinne der vorliegenden Erfindung sind Infrastrukturanlagen wie etwa Deponien (für kommunale oder gewerbliche Abfälle) einschließlich das diese durchziehende Entwässerungssystem, sowie Brücken und deren Entwässerungssysteme aber auch Kläranlagen.

Stehende Wassersysteme im Sinne der vorliegenden Erfindung sind beispielsweise stehende Gewässer in Schwimmbädern oder auch als Matrix in unterirdischen Erdöllagerstätten.

Unter Konditionierungsmittel auf Basis von PSI versteht man im Sinne der vorliegenden Erfindung PSI selber, dessen Copolymere, oder dessen Teilhydrolysate, wie sie beispielsweise aus der Umsetzung von Asparaginsäure mit Asparaginsäure-Natriumsalz gemäß WO 98/47964 erhalten werden in Kombination mit Hilfsstoffen aus gesättigten oder ungesättigten, linearen oder verzweigten Aryl- oder AlkylVerbindungen mit 5 bis 50 C-Atomen, bevorzugt 5 bs 20 C-Atomen, der Gruppe Carbonsäuren (Fettsäuren), Carbonsäuresalze, Carbonsäurester, Carbonsäureamide, Carbonsäurenitrile, Imide, Amine, Alkohole und ihren Estern mit organischen oder anorganischen Säuren, Ether, Sulfonate, Thioester oder Thioether, wobei die funtionellen Gruppen der Hilfsstoffe primär, sekundär oder tertiär sein können.

Die in den oben genannten Bauwerken bzw. Operationen unter Ausnutzen der Wassereigenschaften anfallenden Grund-, Ab-, Sicker- oder Fließwässer weisen einen unterschiedlich hohen Gehalt an gelösten Wasserinhaltsstoffen auf. Diese vorwiegend anorganischen Wasserinhaltsstoffe verursachen oft harte Ablagerungen. Beim Eintritt von beispielsweise Grund- oder Sickerwässer in Entwässerungssysteme verändern sich die physikalischen Bedingungen derart, dass die ursprünglich gelösten Wasserinhaltsstoffe harte, festhaftende Ablagerungen bilden, welche in amorpher oder kristalliner Form vorliegen können. Diese Ablagerungen (Versinterungen) bestehen üblicherweise aus Calciumcarbonat, Magnesiumcarbonat, Calciumsulfat (Gips), Silikaten (SiO₂), Bariumsulfat und Eisenoxiden, alle gegebenenfalls in ihrer hydratisierten Form.

Diese harten, festhaftenden Ablagerungen verkleinem den Abflussquerschnitt oder schließen den Abfluss in Extremfällen ganz. In der Folge können die anfallenden Wassermengen nicht mehr frei abfließen, und es bilden sich Rückstaus, die große Schäden verursachen können.

Im Bereich von beispielsweise Schwimmbädern ist das Inhaltswasser derart zu konditionieren, dass es nicht zu Ablagerungen an den Beckenwänden oder in Pumpen und Filtern kommt. Im Bereich der Exploration von Rohstoffen, beispielsweise der Erdölförderung, erfordern die dort einzusetzenden Konditionierungsmittel hohe Druckstabilität und hohe Thermostabilität.

Aus WO 94/19288 ist ein Verfahren zur Verhinderung von Ablagerungen in einem Bauwerksentwässerungssystem bekannt, das dadurch gekennzeichnet ist, dass dem abzuführenden Sicker- oder Grundwasser ein Konditionierungsmittel zugegeben wird, das ein Stabilisierungsmittel für Härtebildner und ein Dispergiermittel enthält.

Dabei kommen als Konditionierungsmittel unter anderem Maleinsäureanhydrid-Polymere und Copolymere zum Einsatz.

Aus US-A 5 523 023 sind Konditionierungsmittel für Wassersysteme bekannt, die eine wirksame Menge PSI oder dessen Hydrolysate enthalten. Aus DE-A 19 603 052 sind Konditionierungsmittel für Wasser zu entnehmen, die ein Produkt aus wiederkehrenden Succinimid-Einheiten, also PSI, enthalten. Aus DE-A 4 342 930 ist ein Wasser-Konditionierungsmittel bekannt, das ein hydrolysiertes Polymerisat des Maleinimids enthält.

Aus EP 0 638 049 B1 und aus CH 689 452 A5 sind Verfahren zur Verhinderung von zementbedingten Ablagerungen in einem Bauwerksentwässerungssystem bekannt, wobei als Konditionierungsmittel Polyasparaginsäure eingesetzt wird.

Nachteilig an den im Stand der Technik aufgeführten Konditionierungsmitteln ist die Tatsache, dass die dazu verwendeten Härtebildner/Härtestabilisatoren und Dispergatoren aufgrund ihrer leichten Löslichkeit in Wasser zu leicht vom Sickerwasser oder Grundwasser abtransportiert werden und es folglich eines permanenten Eintrags weiteren Konditionierungsmittels bedarf.

Die Polyasparaginsäure und erst recht ihre Salze, aber auch vergleichbare Verbindungen wie beispielsweise Polyacrylsäure, deren Copolymere und deren Salze haben in der Praxis folgende Nachteile:
- Sie stellen in fester Form stark hygroskopische Substanzen dar, die sich nur mit hohem Anteil von (inertem) Bindemittel zu in Wasser formstabilen Depotsteinen verpressen lassen. Ein hoher Wirkstoffanteil der Depotsteine wird dadurch erschwert.
- Die Löslichkeit von Polyaspartaten, Polyacrylatenoder Polyacrylat/Polymaleinat-Copolymeren in Wasser ist sehr hoch. Damit findet eine Stoßdosierung über einen kurzen Zeitraum statt. Sinnvoll wäre aber eine möglichst gleichmäßige Dosierung, die möglichst proportional zum pH-Wert (bei sehr alkalischem pH-Wert der Bauwerkswässer ist meist auch die Versinterungsproblematik sehr hoch) ansteigt. Dies ist mit den herkömmlichen Rohstoffen für Depotsteine schwer zu erreichen.
- Polyasparaginsäure wie deren Salze ermöglichen aufgrund ihrer biologischen Abbaubarkeit eine sofortige Besiedlung durch Mikroorganismen, die diese als Substrat benutzen. Das Ergebnis ist ein Biofilm auf diesen Depotsteinen, der in der Umgebung des Steines zu einem Biofouling mit entsprechender Korrosionsproblematik bezüglich Beton führt. Wünschenswert wäre daher eine nur wenig wasserlösliche und biologisch wenig abbaubare Substanz, die als Precursor zu dem eigentlichen Wirkstoff anzusehen ist und diesen in niedrigen, aber im Sinne der Scaleinhibierung ausreichenden Konzentrationen freisetzt. Damit würde die Biofoulingproblematik reduziert.
- Die Thermostabilität der Polyasparaginsäuren ist bei hohen Temperaturen nicht immer gewährleistet.

Es bestand daher die Aufgabe, Eigenschaften von Konditionierungsmitteln auf Basis von Polysuccinimid für die Konditionierung stehender und fließender Wassersysteme zu hinsichtlich deren Wirkungskorrelation zwischen Dispergiereigenschaften und Härtestabilisatoreigenschaften sowie dessen Thermostabilität gegenüber dem Stand der Technik zu verbessern.. Ein derart verbessertes Konditionierungsmittel wäre in stehenden Gewässern, wie beispielsweise Schwimmbädern; aber auch in Extremsituationen wie beispielsweise den Squeeze-Operationen universell einsetzbar.

Die Lösung der Aufgabe und damit Gegenstand der vorliegenden Erfindung ist ein Konditionierungsmittel zur Konditionierung stehender und fließender Wassersysteme, dadurch gekennzeichnet, dass diese einen wirksamen Gehalt von 0,1 bis 10000 g/m³ zu konditionierendem Wassersystem an Polysuccinimid (PSI) oder dessen Teilhydrolysat in Kombination mit Hilfsstoffen aus gesättigten oder ungesättigten linearen Alkylverbindungen mit 5 bis 20 C-Atomen aus der Gruppe der Carbonsäuren (Fettsäuren), Carbonsäureester, Carbonsäureamide enthalten, sowie ein Verfahren zur Verhinderung von Ablagerungen in stehenden oder fließenden Wassersystemen, das dadurch gekennzeichnet ist, dass dem stehenden Wasser oder dem abzuführenden Sicker-, Grund-, Ab- oder Fließwasser ein Konditionierungsmittel auf Basis von Polysuccinimid, mit einem wirksamen Gehalt von 0,1 bis 10000 g/m³ zu konditionierendem Wassersystem an Polysuccinimid, in Kombination mit gesättigten oder ungesättigten linearen Alkylverbindungen mit 5 bis 20 C-Atomen aus der Gruppe der Carbonsäuren (Fettsäuren), Carbonsäureester, Carbonsäureamide zugegeben wird. Als Hilfsstoffe werden besonders bevorzugt C₅ bis C₂₀ Carbonsäuren (Fettsäuren) eingesetzt.

Durch die Zugabe des erfindungsgemäßen Konditionierungsmittels auf Basis von PSI/Hilfsstoffe, bevorzugt PSI/Fettsäuren zu dem zu behandelnden Wasser kann das Aufwachsen der Kristallkeime wirkungsvoll verhindert werden. Gleichzeitig wird die Bildung von harten Ablagerungen unmöglich. Wie bereits oben beschrieben werden im Rahmen der vorliegenden Erfindung unter PSI das Polysuccinimid selber, dessen Copolymere oder dessen Teilhydrolysate verstanden.

Konditionierungsmittel für wässrige Systeme werden auf Grund ihrer Wirkungsweise verschieden bezeichnet, z.B. als Dispergiermittel, Härtestabilisatoren und Schutzkolloide. Dazu gehören auch Sequestrierungsmittel (Komplexierungsmittel) und gegebenenfalls auch weitere grenzflächenaktive Stoffe (Tenside) sowie Biozide. Wichtig sind insbesondere Härtestabilisatoren, d.h. Verbindungen, die zur Stabilisierung der Härtebildner in Entwässerungssystemen geeignet sind, wobei sie das Kristallwachstum desaktivieren und zumeist Oberflächenladung verändernde Eigenschaften aufweisen, sowie Dispergatoren (Dispergiermittel). Dispergiermittel sind Oberflächenladung verändernde Verbindungen, die ungelöste Feststoffteilchen im Wasser - auch im kolloidalen Bereich - dispergieren, d.h. fein verteilt halten. Erfindungsgemäß zu verwendenden Konditionierungsmittel auf Basis von PSI/Hilfsstoffen, bevorzugt PSI/Fettsäuren, werden dem stehenden oder fließenden Wassersystem in Abhängigkeit vom jeweiligen Anwendungsbereich zugegeben.

So erfordern die Explorationsprozesse von Erdölen oder Erdgasen, insbesondere die Squeeze-Operationen, deutlich höhere Mengen PSI, als der Einsatz in stehenden Wassersystemen, wie beispielsweise Schwimmbädern. PSI wird deshalb dem stehenden oder fließenden Wassersystem, bevorzugt in wässriger Lösung, in Mengen von 0,1 bis 10000 g/m³, insbesondere 0,5 bis 5000 g/m³ des zu konditionierenden Wassersystems, zugegeben. PSI kommt dabei in Kombination mit den oben genannten Hilfsstoffen, bevorzugt Fettsäuren und gegebenenfalls mit weiteren Konditionierungsmitteln zur Anwendung.

Härtestabilisatoren und Dispergatoren überschneiden sich oft in ihrer Wirkung. Daher werden Konditionierungsmittel, bevorzugt auch Kombinationen mit Härtestabilisatoren oder Dispergatoren eingesetzt, wobei sich in der Regel ein höherer Wirkungsgrad gegenüber dem getrennten Einsatz ergibt. Konditionierungsmittel können auch noch weitere geeignete Zusätze enthalten, wobei aber immer für die Behandlung des abzuführenden Sicker- oder Grundwassers entscheidend sein muss, dass durch den Einsatz eines spezifischen Konditionierungsmittels bzw. Konditionierungsmittelgemisches eine umweltgerechte Verhinderung von Versinterungen erreicht wird.

Das als eine wensetliche Komponente bei der erfindungsgemäßen Verwendung als Konditionierungsmittel einzusetzende PSI, dessen Copolymere, und dessen Teilhydrolysate zeigen eine sehr günstige Wirkungskorrelation von Dispergier- und Härtestabilisatoreigenschaften und werden in Verbindung mit einem slow-release-Effekt, d.h. allmählicher Freisetzung des Wirkstoffs Polyasparaginsäure, zur Konditionierung stehender und fließender Wassersysteme, insbesondere der Bauwerksentwässerung, insbesondere der Tunnelentwässerung und in der Erdölexploration eingesetzt. PSI, dessen Copolymere sowie dessen Teilhydrolysate, ist daher besonders geeignet zur Verhinderung
von Ablagerungen, insbesondere von Calciumcarbonat, Magnesiumcarbonat, Calciumsulfat, Silikaten, Bariumsulfat oder Eisenoxiden, Darüber hinaus zeigt PSI zur Konditionierung stehender und fließender Wassersysteme folgende Vorteile:
- PSI ist nicht hygroskopisch und lässt sich mit geringem Bindemittelanteil von beispielsweise ≤ 10 % zu formstabilen Depotsteinen verpressen.
- PSI zeigt als Imid einen auf das Gewicht bezogenen höheren Wirkstoffanteil als das natriumhaltige Natriumpolyaspartat.
- PSI löst sich langsam auf, wobei die Auflösegeschwindigkeit mit dem pH ansteigt; es zeigt daher die gewünschte slow-release Eigenschaft.
- PSI zeigt aufgrund seiner geringen Löslichkeit ein gegenüber Polyasparaginsäure verlangsamtes Abbauverhalten mit entsprechend reduziertem Potential zu Biofouling.
- PSI ist aufgrund seiner Säure freisetzenden Eigenschaft in der Lage, Kalkablagerungen zurückzubilden und abzulösen. Im Gegensatz zu den leichtlöslichen organischen Säuren wird durch das unlösliche PSI ein Verbleiben des Wirkstoff-Precursors am Ort der Versinterung gewährleistet.

PSI kann in großtechnischem Maßstab durch thermische Polymerisation von Maleinsäureanhydrid und Ammoniak oder deren Derivate hergestellt werden (siehe US-A 3,846,380; US-A 4,839,461; US-A 5,219,952 oder US-A 5,371,180).

Darüber hinaus erhält man PSI durch thermische Polymerisation von Asparaginsäure (US-A 5,051,401) gegebenenfalls in Gegenwart saurer Katalysatoren/Lösungsmittel (US-A 3,052,5655).

PSI fällt bei der chemischen Synthese als Polymer mit einem mittleren Molgewicht von 500 bis 20.000, bevorzugt 3.000 bis 5.000, an. Polysuccinimid ist als chemischer Vorläufer der Polyasparaginsäure zu betrachten, zu der es mit Wasser langsam hydrolysiert. Der pH-Wert der dabei entstehenden Lösung liegt zwischen pH von 1 bis 4, bevorzugt 2 bis 3. Hierdurch kommt nicht nur die gute steinlösende, sondern auch gleichzeitig die dispergierende Wirkung der durch PSI freigesetzten Polyasparaginsäure gegenüber schwerlöslichen Calciumsalzen bzw. anderen schwerlöslichen Stoffen zum Tragen. Die resultierende saure Lösung führt aufgrund ihrer Säurewirkung auch zur direkten Auflösung eventuell gebildeter Calciumcarbonat-Inkrustationen. Vor allem in harten Gebirgswässern mit erhöhtem pH-Wert und damit verschärfter Inkrustationsproblematik zeigt PSI günstigerweise eine erhöhte Löslichkeit. Zudem ist PSI wegen seiner langsamen Hydrolyse bei zugleich geringer Wasserlöslichkeit lange am Einsatzort wirksam und damit dem direkten Einsatz von Polyasparaginsäure deutlich überlegen (slow-release Effekt).

Gegebenenfalls können neben der Mischung aus PSI/Fettsäuren weitere Härtestabilisatoren bei der erfindungsgemäßen Verwendung eingesetzt werden. Als zusätzliche Härtestabilisatoren können Verbindungen der Reihe anorganische kondensierte Phosphate, wie Alkali-di-, -tri- und -polyphosphate, organische Phosphorverbindungen oder Organophosphonsäuren, wie beispielsweise 2-Methyl-propanphosphonsäure, Hydroxyethylidendiphosphonsäure, Aminomethylenphosphonsäuren, N-haltige Phosphonate, Aminophosphonate, Aminoalkylenphosphonsäuren wie Aminotri(methylenphosphonsäure) oder Diethylentriamino-penta(methylenphosphonsäure), Poly(aminomethylen-phosphonate), oder Hydroxyethyl-ethylen-(di(aminomethylen)-phosphonsäure), ferner Phosphonocarbonsäuren, z.B. Phosphonobutan-tricarbonsäure, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, wie oxidierte Zellulose, Stärke oder Dextrin, Proteine und andere Eiweißprodukte, wasserlösliche Polyaminosäuren, beispielsweise Polyasparaginsäure, Silikate, wie Alkalisilikate, Wasserglas oder Zeolithe eingesetzt werden.

Auch die wasserlöslichen Salze der aufgeführten Säuren sind als Härtestabilisatoren neben der PSI/Fettsäuren-Mischung geeignet, bevorzugt die Natriumsalze.

In einer besonders bevorzugten Ausführungsform der vorliegenden Erfindung wird PSI zusammen mit Polyasparaginsäure als Konditionierungsmittel verwendet. Da PSI unter geeigneten Bedingungen zu Polyaspartat hydrolysiert, selber jedoch eher als hydrophob anzusehen ist, erhält man eine Depotwirkung an Härtestabilisator im Sinne einer "slow-release" Wirkung.

Als Dispergatoren für die Konditionierungsmittel zur Konditionierung stehender und fließender Wassersysteme im Rahmen der erfindungsgemäßen Verwendung sind unter anderem geeignet: Tanninderivate, wie sulfitierte Tannine, Ligninsulfonate, sulfonierte Kondensationsprodukte des Naphthalins mit Formaldehyd, anionische Polyelektrolyte; z.B. Polymerisate auf Acrylatbasis, wie Polyacrylate, Polymethacrylate, Polyacrylamide und Copolymere von Acrylsäure bzw. Methacrylsäure und Acrylamid, ferner P-haltige polymere Verbindungen, wie N-Phosphomethyl-makrocyclische Polyether oder phosphonomethylierte Oxyalkylenamine sowie Phosphinsäure-haltige Homo- und Copolymere von Acrylsäure und Acrylamid und oligomere Phosphinico-Bernsteinsäure-Verbindungen (wie sie in der US-A 4 088 678 beschrieben werden). Weiter sind geeignet Polymere mit N-substituierten Amidfunktionen, z.B. sulfomethylierte oder sulfoethylierte Polyacrylamide und Polymethacrylamide und Copolymere bzw. Terpolymere mit Acrylsäure und Maleinsäureester, N-Butylacrylamid und dessen Copolymere und Acrylamidopropionsulfonsäure als Salz und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure. Solche und ähnliche Verbindungen sind z.B. beschrieben in EP-A 225 596, EP-A 238 852, EP-A 238 853, EP-A 238 729, EP-A 265 846, EP-A 310 099, EP-A 314 083, EP-A 330 876 oder EP-A 517 470. Wasserlösliche Salze entsprechender Säuren sind ebenfalls geeignet.

Weiterhin können den erfindungsgemäß zu verwendenden Konditionierungsmitteln zur Konditionierung stehender und fließender Wassersysteme Sequestrierungsmittel zugegeben werden.

Als Komplexierungsmittel im Sinne der vorliegenden Erfindung eignen sich unter anderem Iminodisuccinat (IDS), Nitrilotriessigsäure, Zitronensäure, Ethylendiamintetraessigsäure (EDTA), Ethercarboxylate oder oxidierte Kohlehydrate, beispielsweise partiell hydrolysierte und oxidierte Stärke oder Dextrin. Weiterhin sind phosphorhaltige Komplexbildner wie z.B. kondensierte Phosphate und Phosphonate, geeignet, sofern diese nicht bereits in ihrer Funktion als Härtestabilisatoren bereits eingesetzt werden.

Bei der erfindungsgemäßen Verwendung können den Konditionierungsmitteln zur Konditionierung stehender und fließender Wassersysteme weitere Zusätze wie beispielsweise Aluminatverbindungen (siehe EP-A 0 302 522), Stabilisatoren, wie polyquaternäre Amine, z.B. Poly(dimethylamino-co-epichlorhydrin) oder Poly(diallyldimethyl-ammoniumchlorid) (wie sie in der US-A 5 038 861 beschrieben sind), oder geeignete Tenside, wie z.B. Alkyl-aryl-sulfonate, Polyvinylsulfonate, Natriummethoxymethylcellulose etc. zugegeben werden.

Wie bereits oben beschrieben, können den Konditionierungsmitteln zur Konditionierung von stehenden und fließenden Wassersystemen zur Eindämmung des Wachstums von Mikroorganismen Biozide hinzugefügt werden. Prinzipiell sind dafür alle gemäß den nationalen Vorschriften zur Reinhaltung von Gewässern anzuwendenden Biozide geeignet. Als bevorzugte Biozide im Sinne der vorliegenden Erfindung werden Phthalimidoperoxohexansäure, Dibenzoperoxid, Chlorbromdimethylhydantoin oder weitere organische Peroxide eingesetzt.

Die Anwendung der Konditionierungsmittel kann in üblicher Form wie beispielsweise Pulver, Tabletten oder Depotsteinen erfolgen. Darüber hinaus sind aber auch weitere Anwendungsformen möglich, die die Depotwirkung (d.h. die allmählich und zeitlich konstant Wirkstoff freisetzende Wirkung) des PSI bzw. slow-release Eigenschaft unterstützen in Form von wasserdurchlässigen oder selbstauflösenden Beuteln aus geeigneten synthetischen oder biologisch abbaubaren Polyesteramiden wie z.B. dem BAK™ (Bayer AG) einbetten, wobei gemäß dem biologischen Abbau der Matrix (Polyesteramid) das PSI sich in Polyasparaginsäure umwandelt.

Das Verpressen des PSI mit Fettsäuren in sogenannte Depotsteine oder Tabletten erfolgt gegebenenfalls mittels diverser Hilfsstoffe. Bevorzugt einzusetzende Fettsäuren im Sinne der vorliegenden Erfindung sind C₅-C₅₀ Fettsäuren, besonders bevorzugt C₅-C₂₀ Fettsäuren, insbesondere bevorzugt Stearinsäure, Palmitinsäure oder Laurinsäure.

Beispielhaft werden Depotsteine in der Schweizer Bauzeitung des SIA "Schweizer Ingenieur und Architekt", Nr. 12, 24. März 2000, dargestellt.

### Beispiele

### Formulierungsbeispiele

90 % PSI wurden mit 10 % Palmitinsäure oder Stearinsäure innig vermischt und diese Mischung mittels einer Tablettiermaschine zu tablettenähnlichen Formkörpern verpresst. Diese Formkörper wurden bei einer Auflösegeschwindigkeit von 70 mg/h, Gewicht 50 g, in solchen Mengen eingesetzt, dass eine Konzentration in den Sickerwässern von ca. 0,1 bis 100 ppm gewährleistet war.

Ein weiteres Beispiel für neutrale Wässer enthielt 70 % PSI, 25 % Polyasparaginsäure-Natriumsalz (PASP) und 4,5 % Palmitin- bzw. Stearinsäure und 0,5 % Dibenzoylperoxid.

### Anwendungsbeispiele

### Versuchsbeschreibung (Auflösung von PSI bei unterschiedlichen pH-Werten):

Eine kleine Durchfluss-Probenzelle wird mit 500 mg PSI in der Weise bestückt, dass zu jedem Zeitpunkt der Messung noch genügend Substanz zum Auflösen zur Verfügung steht. Diese wird mit einer Durchfluss-Geschwindigkeit von 2,25 ml/min von einer pH-eingestellten Lösung, durchströmt.

Aus einem Vorratsgefäß (Volumen 2000 ml) wird Lösung entnommen, passiert die Pumpe und dann die Durchflussküvette (auf konstante Temperatur von 25°C temperiert) im Fluoreszenz-Spektrometer. Von hier aus erreicht sie die Probezelle, in der das PSI umströmt wird, um dann wieder in das Vorratsgefäß zu gelangen.

Die Excitations- und Emissions-Wellenlängen betragen, typisch für die Detektion der Polyasparaginsäure, 334 nm und 411 nm. Es wurde die Steigerung der Konzentration der Polyasparaginsäure in Abhängigkeit von der Zeit über die Fluoreszenz-Konzentrations-Korrelation (Kalibriergerade) bestimmt, wobei der sich einstellende Konzentrationsanstieg als Konzentrationssteigerung pro Zeiteinheit ausgedrückt wurde. Die Methode der fluorometrischen Bestimmung wird in der DE-A 10 042 498 eingehend für den Nachweis von Polyasparaginsäuren beschrieben, lässt sich aber auch zur Bestimmung der allmählichen Freisetzung von Polyasparaginsäure aus PSI heranziehen.

### Versuchsergebnis:

Unter den oben beschriebenen Bedingungen wurden Auflösegeschwindigkeiten für folgende pH-Werte ermittelt:

| **pH-Wert** | **Auflösegeschwindigkeit [ppm/h]** |
|---|---|
| **8** | 15,6 |
| **10** | 24,6 |
| **11** | 31,2 |
| **12** | 130,7 |

Mit zunehmendem pH-Wert steigt die Auflösegeschwindigkeit des PSI. Dies ist eine vorteilhafte Eigenschaft des Materials, da bei erhöhtem pH-Wert die Löslichkeit von Calciumcarbonat deutlich erniedrigt ist und damit eine Eigenregelung vorliegt. Bei pH-Werten, wo das Versinterungsproblem am größten wird, gibt PSI am meisten Polyasparaginsäure an die Lösung ab.

Wichtig für ein sich selbst regulierendes System (im Hinblick auf eine einzustellende Wirkstoffkonzentration) ist auch die der Durchflussrate proportionale Auflösung.

### Versuchsbeschreibung (PSI von unterschiedlichen Fließgeschwindigkeiten umströmt):

Eine kleine Durchfluss-Probenzelle wird mit 500 mg PSI in der Weise bestückt, dass zu jedem Zeitpunkt der Messung noch genügend Substanz zum Auflösen zur Verfügung steht. Diese wird mit verschiedenen Durchfluss-Geschwindigkeiten, aber konstantem pH-Wert, durchströmt.

Aus einem Vorratsgefäß - das Volumen der wässrigen Lösung beträgt 2000 ml - wird Lösung entnommen, passiert die Pumpe und dann die Durchflussküvette (die auf eine konstante Temperatur von 25°C temperiert wird) im Fluoreszenz-Spektrometer. Von hier aus erreicht sie die Probezelle, in der das PSI umströmt wird, um dann wieder in das Vorratsgefäß zu gelangen.

Die Excitations- und Emissions-Wellenlängen betragen, typisch für die Detektion der Polyasparaginsäure, 334 nm und 411 nm.

### Versuchsergebnis:

Unter den oben beschriebenen Bedingungen wurden Auflösegeschwindigkeiten für folgende Durchfluss-Geschwindigkeiten ermittelt:

| **pH-Wert** | **Durchfluss [ml/min]** | **Löslichkeit [ppm/h]** | **Löslichkeit [%]** |
|---|---|---|---|
| 8 | 0,138 | 0,0177 | 1,1*10⁻³ |
| 8 | 0,6 | 5,0 | 32,1 |
| 8 | 2,25 | 15,6 | 100 |
| 10 | 0,138 | 0.0193 | 7,8*10⁻³ |
| 10 | 0.6 | 5.5 | 22.4 |
| 10 | 2.25 | 24,6 | 100 |

Trägt man die Auflösegeschwindigkeit, gemessen in [ppm/h], gegen die spezifische (spez.) Belastung, gemessen in Bettvolumina pro Stunde auf (BV/h), so erkennt man für kleine Strömungs-Geschwindigkeiten niedrige Auflöseraten des PSI.

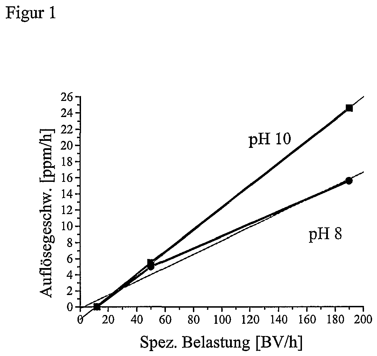

Die besonders im alkalischen Bereich hohe Wirksamkeit des PSI wird dabei ebenso deutlich. Bei höherem pH-Wert wird bei niedrigerem Fluss eine Reduzierung der Auflösung des PSI auf weniger als ein Viertel erreicht, während sich bei niedrigen pH-Werten die Auflöserate des PSI auf ein Drittel reduziert (siehe Figur 1).

Dies bedeutet, dass bei hohem pH-Wert und damit erhöhtem Materialfluss genügend Konditionierungsmittel freigesetzt wird, so dass das System die Wirksamkeit beibehält und trotzdem sparsam mit den Ressourcen umgeht.

## Patentansprüche

1. Konditionierungsmittel zur Konditionierung stehender oder fließender Wassersysteme, **dadurch gekennzeichnet, dass** diese einen wirksamen Gehalt von 0,1 bis 10000 g/m³ zu konditionierendem Wassersystem an Polysuccinimid (PSI) oder dessen Teilhydrolysat in Kombination mit Hilfsstoffen aus gesättigten oder ungesättigten, linearen Alkylverbindungen mit 5 bis 20 C-Atomen aus der Gruppe der Carbonsäuren (Fettsäuren), Carbonsäureester, Carbonsäureamiden enthalten.

2. Konditionierungsmittel gemäß Anspruch 1, **dadurch gekennzeichnet, dass** als Carbonsäuren Stearinsäure, Palmitinsäure oder Laurinsäure, eingesetzt werden.

3. Konditionierungsmittel gemäß Ansprüchen 1 oder 2, **dadurch gekennzeichnet, dass** neben PSI Härtestabilisatoren der Reihe anorganische kondensierte Phosphate, Organophosphonsäuren, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, Proteine, wasserlösliche Polyaminosäuren, Silikate oder Zeolithe eingesetzt werden.

4. Konditionierungsmittel gemäß einem der Ansprüche 1 bis 3, **dadurch gekennzeichnet, dass** Dispergatoren der Reihe Tanninderivate, Ligninsulfonate, sulfonierte Kondensationsprodukte des Naphthalins mit Formaldehyd, Polyacrylate, Polymethacrylate, Polyacrylamide, Polymerisate auf Acrylatbasis, P-haltige polymere Verbindungen, Phosphinsäure-haltige Homo- und Copolymere von Acrylsäure und Acrylamid, oligomere Phosphinico-Bernsteinsäure-Verbindungen, sulfomethylierte oder sulfoethylierte Polyacrylamide und Copolymere bzw. Terpolymere mit Acrylsäure und Maleinsäureester, N-Butylacrylamid und dessen Copolymere, Acrylamidopropionsulfonsäure als Salz und deren Copolymere, Maleinsäure- oder Maleinsäureanhydrid-Polymere und Copolymere, phosphinoalkylierte Acrylamidpolymere und Copolymere mit Acrylsäure, Copolymere von Alkenen mit ungesättigten Dicarbonsäuren eingesetzt werden.

5. Konditionierungsmittel gemäß einem der Ansprüche 1 bis 4, **dadurch gekennzeichnet, dass** Komplexbildner der Reihe Iminodisuccinat, Nitrilotriessigsäure, Zitronensäure, EDTA, Ethercarboxylate, oxidierte Kohlehydrate oder phosphorhaltige Verbindungen eingesetzt werden.

6. Konditionierungsmittel gemäß einem der Ansprüche 1 bis 5, **dadurch gekennzeichnet, dass** diese weitere Zusätze enthalten.

7. Konditionierungsmittel gemäß Anspruch 6, **dadurch gekennzeichnet, dass** diese Zusätze Biozide sind.

8. Konditionierungsmittel gemäß einem der Ansprüche 1 bis 7, **dadurch gekennzeichnet**, das die Anwendung als Pulver, Tabletten oder Depotsteine erfolgt.

9. Verfahren zur Verhinderung von Ablagerungen in stehenden oder fließenden Wassersystemen, **dadurch gekennzeichnet, dass** dem stehenden Wasser oder dem abzuführenden Sicker-, Ab-, Fließ- oder Grundwasser ein Konditionierungsmittel auf Basis von Polysuccinimid, mit einem Gehalt von 0,1 bis 10000 g/m³ zu konditionierendem Wassersystem an Polysuccinimid (PSI), in Kombination mit Hilfsstoffen aus gesättigten oder ungesättigten, linearen Alkylverbindungen mit 5 bis 20 C-Atomen aus der Gruppe der Carbonsäuren (Fettsäuren), Carbonsäureester, Carbonsäureamiden zugegeben wird.

10. Verfahren gemäß Anspruch 9, **dadurch gekennzeichnet, dass** als Carbonsäuren Stearinsäure, Palmitsäure oder Laurinsäure eingesetzt werden.

11. Verfahren gemäß Ansprüchen 9 oder 10, **dadurch gekennzeichnet, dass** das in seiner Depotwirkung erhöhte Konditionierunsmittel in Pulver, Tabletten oder Depotsteinen angewendet wird.

12. Verfahren gemäß einem der Ansprüche 9 bis 11, **dadurch gekennzeichnet, dass** dieses in der Erdölexploration oder Tunnelentwässerung angewendet wird.

## Claims

1. Conditioning agents for conditioning standing or flowing water systems, **characterized in that** these comprise an active content of 0.1 to 10,000 g/m³ of the water system to be conditioned of polysuccinimide (PSI), or its partial hydrolysate in combination with aids of saturated or unsaturated, unbranched alkyl compounds having 5 to 20 carbon atoms selected from the group consisting of carboxylic acids (fatty acids), carboxylic esters, carboxamides.

2. Conditioning agents according to Claim 1, **characterized in that** stearic acid, palmitic acid or lauric acid are used as carboxylic acids.

3. Conditioning agents according to Claims 1 or 2, **characterized in that**, in addition to PSI, hardness stabilizers are used from the group consisting of inorganic condensed phosphates, organophosphonic acids, phosphate esters, polyphosphoric esters, aminophosphates, succinamide, carbohydrates, polysaccharides, gluconates, polyglycosides, polyglucosides and their derivatives, polyoxycarboxylic acids and their copolymers, oxidized carbohydrates, proteins, water-soluble polyamino acids, silicates and zeolites.

4. Conditioning agents according to one of Claims 1 to 3, **characterized in that** dispersants are used selected from the group consisting of tannin derivatives, lignin sulphonates, sulphonated condensation products of naphthalene with formaldehyde, polyacrylates, polymethacrylates, polyacrylamides, acrylate-based polymers, P-containing polymeric compounds, phosphinic-acid-containing homopolymers and copolymers of acrylic acid and acrylamide, oligomeric phosphinico-succinic acid compounds, sulphomethylated or sulphoethylated polyacrylamides and copolymers and terpolymers with acrylic acid and maleic ester, N-butylacrylamide and its copolymers, acrylamidopropionic sulphonic acid as salt and its copolymers, polymers and copolymers of maleic acid or maleic anhydride, phosphinoalkylated acrylamide polymers and copolymers with acrylic acid, copolymers of alkenes with unsaturated dicarboxylic acids.

5. Conditioning agents according to one of Claims 1 to 4, **characterized in that** complexing agents are used selected from the group consisting of iminodisuccinate, nitrilotriacetic acid, citric acid, EDTA, ethercarboxylates, oxidized carbohydrates or phosphorus-containing compounds.

6. Conditioning agents according to one of Claims 1 to 5, **characterized in that** these comprise other additives.

7. Conditioning agents according to Claim 6, **characterized in that** these additives are biocides.

8. Conditioning agents according to one of Claims 1 to 7, **characterized in that** these are used as powders, tablets or slow-release tablets.

9. Process for preventing deposits in standing or flowing water systems, **characterized in that** a conditioning agent based on polysuccinimide, having a content of 0.1 to 10,000 g/m³ of the water system to be conditioned of polysuccinimide (PSI), in combination with aids of saturated of unsaturated, unbranched alkyl compounds having 5 to 20 carbon atoms selected from the group consisting of carboxylic acids (fatty acids), carboxylic esters, carboxamides, is added to the standing water or to the leachate water, effluent water, flowing water or ground water to be drained off.

10. Process according to Claim 9, **characterized in that** stearic acid, palmitic acid or lauric acid are used as carboxylic acids.

11. Process according to Claims 9 or 10, **characterized in that** the conditioning agent with increased slow-release effect is used in powders, tablets or slow-release tablets.

12. Process according to one of Claims 9 to 11, **characterized in that** said process is used in oil exploration or tunnel drainage.

## Revendications

1. Agents de conditionnement pour le conditionnement de systèmes d'eaux stagnantes ou courantes, **caractérisés en ce que** ceux-ci contiennent une teneur active de 0,1 à 10 000 g/m³ du système d'eaux à conditionner en polysuccinimide (PSI) ou son hydrolysat partiel en combinaison avec des adjuvants constitués par des composés d'alkyle linéaires saturés ou insaturés, contenant 5 à 20 atomes C, du groupe constitué par les acides carboxyliques (acides gras), les esters d'acides carboxyliques, les amides d'acides carboxyliques.

2. Agents de conditionnement selon la revendication 1, **caractérisés en ce que** de l'acide stéarique, de l'acide palmitique ou de l'acide laurique est utilisé en tant qu'acide carboxylique.

3. Agents de conditionnement selon la revendication 1 ou 2, **caractérisés en ce qu'**en plus du PSI, des stabilisateurs de dureté de la série constituée par les phosphates condensés inorganiques, les acides organophosphoniques, les esters de phosphate, les esters de l'acide polyphosphorique, les aminophosphates, l'amide de l'acide succinique, les hydrates de carbone, les polysaccharides, les gluconates, les polyglycosides, les polyglucosides et leurs dérivés, les acides polyoxycarboxyliques et leurs copolymères, les hydrates de carbone oxydés, les protéines, les acides polyaminés solubles dans l'eau, les silicates ou les zéolithes sont utilisés.

4. Agents de conditionnement selon l'une quelconque des revendications 1 à 3, **caractérisés en ce que** des dispersants de la série constituée par les dérivés de tanin, les sulfonates de lignine, les produits de condensation sulfonés de naphtaline avec du formaldéhyde, les polyacrylates, les polyméthacrylates, les polyacrylamides, les polymères à base d'acrylate, les composés polymères contenant P, les homo- et copolymères de l'acide acrylique et de l'acrylamide contenant de l'acide phosphinique, les composés de l'acide phosphinico-succinique oligomères, les polyacrylamides sulfométhylés ou sulfoéthylés et les copolymères ou terpolymères avec de l'acide acrylique et un ester de l'acide maléique, le N-butylacrylamide et ses copolymères, l'acide acrylamidopropiosulfonique en tant que sel et ses copolymères, les polymères et copolymères de l'acide maléique ou de l'anhydride de l'acide maléique, les polymères et copolymères d'acrylamide phosphinoalkylés avec de l'acide acrylique, les copolymères d'alcènes avec des acides dicarboxyliques insaturés sont utilisés.

5. Agents de conditionnement selon l'une quelconque des revendications 1 à 4, **caractérisés en ce que** des complexants de la série constituée par l'iminodisuccinate, l'acide nitrilotriacétique, l'acide citrique, l'EDTA, les éther-carboxylates, les hydrates de carbone oxydés ou les composés contenant du phosphore sont utilisés.

6. Agents de conditionnement selon l'une quelconque des revendications 1 à 5, **caractérisés en ce que** ceux-ci contiennent des additifs supplémentaires.

7. Agents de conditionnement selon la revendication 6, **caractérisés en ce que** ces additifs sont des biocides.

8. Agents de conditionnement selon l'une quelconque des revendications 1 à 7, **caractérisés en ce que** l'utilisation a lieu sous la forme de poudres, de tablettes ou de pierres de dépôt.

9. Procédé d'inhibition de dépôts dans des systèmes d'eaux stagnantes ou courantes, **caractérisé en ce qu'**un agent de conditionnement à base de polysuccinimide, ayant une teneur de 0,1 à 10 000 g/m³ du système d'eaux à conditionner en polysuccinimide (PSI), en combinaison avec des adjuvants constitués par des composés d'alkyle linéaires saturés ou insaturés, contenant 5 à 20 atomes C, du groupe constitué par les acides carboxyliques (acides gras), les esters d'acides carboxyliques, les amides d'acides carboxyliques, est ajouté à l'eau stagnante ou à l'eau de percolation, l'eau résiduaire, en écoulement ou souterraine à évacuer.

10. Procédé selon la revendication 9, **caractérisé en ce que** de l'acide stéarique, de l'acide palmitique ou de l'acide laurique est utilisé en tant qu'acide carboxylique.

11. Procédé selon la revendication 9 ou 10, **caractérisé en ce que** l'agent de conditionnement à effet augmenté sur les dépôts est utilisé dans des poudres, des tablettes ou des pierres de dépôt.

12. Procédé selon l'une quelconque des revendications 9 à 11, **caractérisé en ce que** celui-ci est utilisé dans l'exploration pétrolifère ou dans le drainage de tunnels.
